# EUROPÄISCHE PATENTSCHRIFT

(11) **EP 2 651 732 B1**
(45) Veröffentlichungstag und Bekanntmachung des Hinweises auf die Patenterteilung: **25.02.2015**
(21) Anmeldenummer: 11793412.5
(22) Anmeldetag: 05.12.2011
(51) Int. Cl.: B60T 13/74

(54) **VERFAHREN ZUM EINSTELLEN DER VON EINER FESTSTELLBREMSE AUSGEÜBTEN KLEMMKRAFT**
METHOD FOR ADJUSTING THE CLAMPING FORCE EXERTED BY A PARKING BRAKE
PROCÉDÉ PERMETTANT D'AJUSTER LA FORCE DE SERRAGE EXERCÉE PAR UN FREIN DE STATIONNEMENT

(30) Priorität: 17.12.2010 DE 102010063345
(43) Veröffentlichungstag der Anmeldung: 23.10.2013
(73) Patentinhaber: Robert Bosch GmbH, 70442 Stuttgart (DE)
(72) Erfinder: BAEHRLE-MILLER, Frank, 71101 Schoenaich (DE); MUELLER, Ulrike, 71723 Grossbottwar (DE); SCHANZENBACH, Matthias, 74246 Eberstadt (DE); PUTZER, Tobias, 74177 Bad Friedrichshall (DE)
(86) Internationale Anmeldenummer: PCT/EP2011/071772
(87) Internationale Veröffentlichungsnummer: WO 2012/080024

(56) Entgegenhaltungen:
- DE-B3- 10 361 042
- US-B1- 6 311 808

## Beschreibung

Die Erfindung bezieht sich auf ein Verfahren zum Einstellen der von einer Feststellbremse ausgeübten Klemmkraft in einem Fahrzeug.

### Stand der Technik

Aus der DE 103 61 042 B3 ist eine elektromechanische Feststellbremse bekannt, die einen elektrischen Bremsmotor als Aktuator aufweist, dessen Rotationsbewegung in eine axiale Stellbewegung eines Bremskolbens umgesetzt wird. Der Bremskolben ist Träger eines Bremsbelages, welcher gegen die Stirnseite einer Bremsscheibe gedrückt wird. Über die Bestromung des Bremsmotors wird die Höhe der Klemmkraft eingestellt.

Außerdem sind elektromechanische Feststellbremsen bekannt, die mit einer hydraulischen Bremsvorrichtung zusammenwirken, indem der vom Bremsmotor verstellte Bremskolben zusätzlich vom Druck der hydraulischen Bremsvorrichtung beaufschlagt wird. Die Gesamtklemmkraft setzt sich in diesem Fall aus einem elektromotorisch erzeugten Anteil und einem hydraulisch erzeugten Anteil zusammen. Bei der Bereitstellung der Klemmkraft kann eine Geräuschentwicklung auftreten, das auf den Pumpenmotor der hydraulischen Bremsvorrichtung zurückgeht, welcher den erforderlichen Hydraulikdruck erzeugt.

### Offenbarung der Erfindung

Der Erfindung liegt die Aufgabe zugrunde, mit einfachen Maßnahmen und hohem Nutzerkomfort die erforderliche Klemmkraft in einer Feststellbremse eines Fahrzeugs bereitzustellen, die eine elektromechanische und eine Zusatzbremsvorrichtung umfasst.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren kommt in einer Feststellbremse in Fahrzeugen zum Einsatz, die mit einer elektromechanischen Bremsvorrichtung sowie mit einer zuschaltbaren Bremsvorrichtung versehen ist. Die elektromechanische Bremsvorrichtung der Feststellbremse umfasst einen elektrisch betätigbaren Aktuator, über den eine elektromechanische Klemmkraft erzeugt werden kann. Zum Festsetzen des Fahrzeugs im Stillstand wird über die elektromechanische Bremsvorrichtung eine Klemmkraft generiert.

Ergänzend kann die Zusatzbremsvorrichtung zugeschaltet werden, beispielsweise in Fällen, in denen die elektromechanische Klemmkraft nicht ausreicht, um das Fahrzeug mit der erforderlichen Sicherheit festzusetzen. Möglich ist auch eine Zuschaltung der Zusatzbremsvorrichtung zur Entlastung der elektromechanischen Bremsvorrichtung, da der elektromechanische Anteil an der Klemmkraft bei Zuschaltung der Zusatzbremsvorrichtung entsprechend reduziert werden kann.

Bei dem elektrischen Aktuator handelt es sich vorzugsweise um einen elektrischen Bremsmotor, dessen Drehbewegung in eine axiale Stellbewegung eines Bremskolbens umgesetzt wird. Der Bremskolben ist Träger eines Bremsbelages, der gegen die Stirnseite einer Bremsscheibe gedrückt wird.

Grundsätzlich möglich ist aber auch ein sonstiger elektrischer Aktuator zur Erzeugung der elektromechanischen Klemmkraft, beispielsweise ein elektromagnetisches Stellglied.

Die Zusatzbremsvorrichtung ist bevorzugt als hydraulische Bremsvorrichtung ausgebildet, deren Hydraulikdruck zur Erzeugung einer zusätzlichen, ergänzenden Klemmkraft dient. Beispielsweise kann der Bremskolben, welcher von der elektromechanischen Bremsvorrichtung verstellt wird, zusätzlich von dem Hydraulikdruck beaufschlagt werden, so dass sich die Gesamtklemmkraft aus einem elektromechanischen und einem hydraulischen Anteil zusammensetzt.

Bei der Erzeugung der elektromechanischen Klemmkraft wird eine Kenngröße des elektrischen Aktuators auf einen definierten Wert eingeregelt, beispielsweise erfolgt eine Regelung einer elektrischen Kenngröße wie der Strom im Aktuator oder eine Regelung der vom Aktuator erzeugten Kraft. Zugleich wird die Zusatzklemmkraft über eine zugeordnete Zustandsgröße der Zusatzbremsvorrichtung auf einen Sollwert eingestellt, und zwar ohne Regelung mit Rückführschleife, sondern allein aufgrund einer Steuerung ohne Rückführung. Somit wirken bei dem erfindungsgemäßen Verfahren eine Regelung für die elektromechanische Bremsvorrichtung und eine Steuerung für die Zusatzbremsvorrichtung zusammen. Damit ist zum einen eine hinreichend genaue Einstellung einer Gesamtklemmkraft gewährleistet, die sich aus einem elektromechanischen Anteil und einem Anteil der Zusatzbremsvorrichtung zusammensetzt. Die Regelung der elektromechanischen Bremsvorrichtung ermöglicht eine präzise Einstellung der Gesamtklemmkraft.

Zum andern kann das Verfahren aufgrund der ungeregelten Steuerung der Zusatzbremsvorrichtung in einfacher Weise implementiert und durchgeführt werden, da für die Zusatzbremsvorrichtung keine Rückführungsschleife beim Einstellen der Zusatzklemmkraft erforderlich ist. Außerdem ist die Geräuschentwicklung reduziert, da bei der Steuerung nur ein bestimmtes, definiertes Einstellungsniveau der Zusatzbremsvorrichtung erreicht werden muss, das ohne schwankende bzw. wechselnde Zustandsgrößen der Zusatzbremsvorrichtung erzielt werden kann. Bei einer Regelung muss dagegen mit einer ständig wechselnden Zustandsgröße der Zusatzbremsvorrichtung gerechnet werden, was mit einem als unangenehm empfundenen Geräusch mit wechselnder Tonhöhe einhergeht. Für den bevorzugten Fall, dass es sich bei der Zusatzbremsvorrichtung um eine hydraulische Bremsvorrichtung handelt, insbesondere um die reguläre Fahrzeugbremse, muss bei einer Regelung der Pumpenmotor der hydraulischen Bremsvorrichtung zur Erzeugung des gewünschten Hydraulikdrucks mit einer sich fortlaufend ändernden Drehzahl eingeregelt werden. Bei der erfindungsgemäßen Steuerung wird dagegen dem Pumpenmotor ein bestimmter, definierter Drehzahlverlauf aufgeprägt, so dass sich permanent ändernde Drehzahlen vermieden werden können.

Ein weiterer Vorteil ist darin zu sehen, dass die Gefahr einer Schwingungsneigung durch Rückkopplung des Motorstroms des elektrischen Aktuators ausgeschlossen ist. Eine derartige Schwingungsneigung kann dagegen in Feststellbremsen gegeben sein, bei denen sowohl der elektrische Bremsmotor als auch die mit dem Bremsmotor zusammenwirkende, hydraulische Bremsvorrichtung einer Regelung unterzogen werden. In der erfindungsgemäßen Ausführung bleibt die Pumpendrehzahl der Hydraulikpumpe zumindest nahezu konstant, die Komponenten- und Bordnetzbelastung ist reduziert.

Gemäß einer vorteilhaften Ausführung wird als elektrische Kenngröße der den Aktuator beaufschlagende Strom auf Seiten der elektromechanischen Bremsvorrichtung eingeregelt. Zum Erreichen einer gewünschten, elektromechanischen Klemmkraft muss der elektrische Aktuator mit einer bestimmten Stromhöhe beaufschlagt werden. Zusätzlich oder alternativ, insbesondere in einer weiteren Phase des Zuspannvorgangs, erfolgt die Regelung über die vom Aktuator erzeugte Klemmkraft.

Die Zusatzklemmkraft, welche in der Zusatzbremsvorrichtung erzeugt wird, wird zweckmäßigerweise während des Zuspannvorgangs der elektromechanischen Bremsvorrichtung zugeschaltet. Auslöser für die Zuschaltung kann das Erreichen eines definierten Wertebereichs einer Zustandsgröße des Aktuators sein. So ist es beispielsweise vorteilhaft, als Kriterium für das Zuschalten der Zusatzbremsvorrichtung den Strom heranzuziehen, mit dem der elektrische Aktuator beaufschlagt wird. Übersteigt der Strom einen Schwellenwert, so wird die Unterstützung durch die Zusatzbremsvorrichtung angefordert. Der Wertebereich für die betrachtete Zustandsgröße kann entweder fest vorgegeben oder als Funktion von Systemgrößen, insbesondere Zustandsgrößen der elektromechanischen Bremsvorrichtung und/oder der Zusatzbremsvorrichtung festgelegt werden.

Zusätzlich oder alternativ zur Betrachtung des Stroms des elektrischen Aktuators kann die Zusatzunterstützung auch bei Unterschreiten einer Motordrehzahlschwelle aktiviert werden. In diesem Fall, der sich auf die Verwendung eines elektrischen Bremsmotors in der elektromechanischen Bremsvorrichtung bezieht, kann über die zusätzliche Klemmkraftunterstützung die Gefahr reduziert werden, dass der Bremsmotor aufgrund einer zu großen Last stehen bleibt.

Zur Durchführung der Steuerung der Zusatzbremsvorrichtung auf den gewünschten Wert der Zusatzklemmkraft wird eine die Klemmkraft bestimmende Zustandsgröße der Zusatzbremsvorrichtung zweckmäßigerweise auf einen Wert eingestellt, der als Funktion bzw. Kennlinie vorliegt. Beispielsweise kann der Sollwert der Zustandsgröße als zeit- oder wegabhängiger Verlauf vorliegen, so dass zum aktuellen Zeitpunkt bzw. dem aktuellen, zurückgelegten Stellweg des elektromechanischen Aktuators die Zustandsgröße entsprechend eingestellt werden kann. Im Falle einer hydraulischen Bremsvorrichtung als Zusatzbremsvorrichtung handelt es sich bei der Zustandsgröße zweckmäßigerweise um den hydraulischen Druck, der dem Kurvenverlauf folgend ungeregelt auf einen entsprechenden Sollwert eingestellt wird.

Die den Kurvenverlauf bestimmenden Parameter für die Zustandsgröße der Zusatzbremsvorrichtung können entweder fest vorgegeben werden oder als Funktion sonstiger Zustands- bzw. Kenngrößen festgelegt werden, insbesondere von Zustands- bzw. Kenngrößen des elektrischen Aktuators abhängen. Der Kurvenverlauf der Sollwerte für die Zustandsgröße der Zusatzbremsvorrichtung ist beispielsweise als Rampe ausgebildet, die bis zu einem definierten Maximalwert ansteigt. Sowohl die Steigung der Rampe als auch der Maximalwert stellen Parameter dar, die entweder fest vorgegeben oder in Abhängigkeit weiterer Größen der Feststellbremse im laufenden Betrieb festgelegt werden. So ist es beispielsweise möglich, im Falle eines Funktionsabfalles oder Defekts des elektrischen Aktuators und/oder der Zusatzbremsvorrichtung die den Kurvenverlauf bestimmenden Parameter anzupassen. Kann zum Beispiel der Bremsmotor als elektrischer Aktuator der elektromechanischen Bremsvorrichtung die geforderte Klemmkraft aufgrund eines Leistungsabfalls nicht stellen, so kann durch eine Anpassung der Sollkurve für die Zusatzbremsvorrichtung der Leistungsabfall kompensiert werden, insbesondere durch Anheben des Gradienten im rampenförmigen Anstieg und/oder durch Anheben des Maximalwerts. Auch bei einem Defekt in der Zusatzbremsvorrichtung, beispielsweise in der Ausführung als hydraulische Bremsvorrichtung bei Luft im hydraulischen System, kann durch Anpassen der Parameter der Soll-Kennlinie zumindest eine teilweise Kompensation des Leistungsabfalls erreicht werden.

Das erfindungsgemäße Verfahren läuft in einem Regel- bzw. Steuergerät im Fahrzeug ab, das Bestandteil des Feststellbremssystems sein kann.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine elektromechanische Feststellbremse für ein Fahrzeug, bei der die Klemmkraft über einen elektrischen Bremsmotor erzeugt wird,
- Fig. 2: ein Schaubild mit dem zeitabhängigen Verlauf des Stroms, der Spannung und der Motordrehzahl sowie des hydraulischen Drucks und der Gesamtklemmkraft beim Zuspannvorgang der Feststellbremse,
- Fig. 3: ein Schaubild mit dem Verlauf eines Strom-Schwellenwerts als Funktion der Spannung,
- Fig. 4: ein Schaubild mit dem Verlauf des Solldrucks für die hydraulische Bremsvorrichtung als Funktion der Zeit,
- Fig. 5: ein Ablaufschema mit den einzelnen Verfahrensschritten zur Durchführung des Verfahrens zum Einstellen der Feststellbremse.

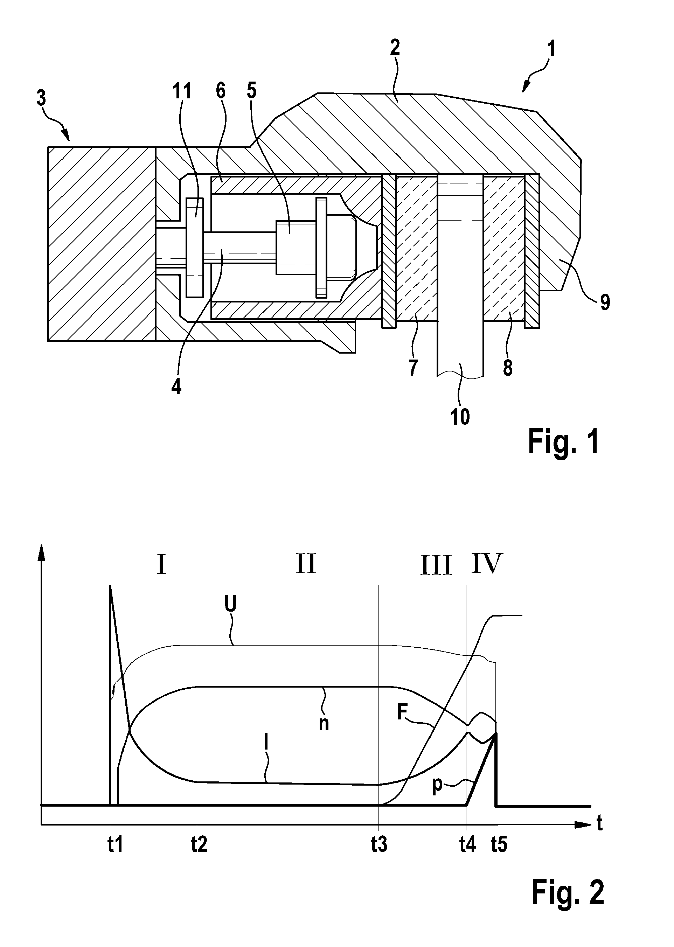

In Fig. 1 ist eine elektromechanische Feststellbremse 1 zum Festsetzen eines Fahrzeugs im Stillstand dargestellt. Die Feststellbremse 1 umfasst einen Bremssattel 2 mit einer Zange 9, welche eine Bremsscheibe 10 übergreift. Als Stellglied weist die Feststellbremse 1 einen Elektromotor als Bremsmotor 3 auf, der eine Spindel 4 rotierend antreibt, auf der ein Spindelbauteil 5 drehbar gelagert ist. Bei einer Rotation der Spindel 4 wird das Spindelbauteil 5 axial verstellt. Das Spindelbauteil 5 bewegt sich innerhalb eines Bremskolbens 6, der Träger eines Bremsbelags 7 ist, welcher von dem Bremskolben 6 gegen die Bremsscheibe 10 gedrückt wird. Auf der gegenüberliegenden Seite der Bremsscheibe 10 befindet sich ein weiterer Bremsbelag 8, der ortsfest an der Zange 9 gehalten ist.

Innerhalb des Bremskolbens 6 kann sich das Spindelbauteil 5 bei einer Drehbewegung der Spindel 4 axial nach vorne in Richtung auf die Bremsscheibe 10 zu bzw. bei einer entgegen gesetzten Drehbewegung der Spindel 4 axial nach hinten bis zum Erreichen eines Anschlags 11 bewegen. Zum Erzeugen einer Klemmkraft beaufschlagt das Spindelbauteil 5 die innere Stirnseite des Bremskolbens 6, wodurch der axial verschieblich in der Feststellbremse 1 gelagerte Bremskolben 6 mit dem Bremsbelag 7 gegen die zugewandte Stirnfläche der Bremsscheibe 10 gedrückt wird.

Die Feststellbremse kann erforderlichenfalls von einer hydraulischen Fahrzeugbremse unterstützt werden, so dass sich die Klemmkraft aus einem elektromotorischen Anteil und einem hydraulischen Anteil zusammensetzt. Bei der hydraulischen Unterstützung wird die dem Bremsmotor zugewandte Rückseite des Bremskolbens 6 mit unter Druck stehendem Hydraulikfluid beaufschlagt.

Fig. 2 zeigt den zeitlichen Verlauf verschiedener Betriebsgrößen einer Feststellbremse bei einem Zuspannvorgang der Bremse. Der Zuspannvorgang kann im Wesentlichen in vier Phasen unterteilt werden:
Zu Beginn einer Phase I im Zeitpunkt t1 wird ein Zuspannwunsch erkannt und der elektrische Bremsmotor 3 eingeschaltet. Beim Einschalten des Bremsmotors 3 ist ein Einschalt-Strompeak erkennbar. Der Strom I des Bremsmotors fällt dann im weiteren Verlauf ab, bis sich am Ende der Phase I zum Zeitpunkt t2 ein Leerlaufstrom einstellt. Die Drehzahl n des Bremsmotors steigt in Phase I an, der Bremsmotor wird beschleunigt. Am Ende der Phase I zum Zeitpunkt t2 erreicht die Drehzahl n des Bremsmotors eine Leerlaufdrehzahl. Die Spannung U des Bremsmotors steigt ebenfalls an, am Ende der Phase I stellt sich eine Leerlaufspannung ein. Durch die Rotation einer Spindel wird eine Mutter bzw. das Spindelbauteil in Richtung des Bremskolbens der Radbremse bewegt. Da die Mutter mit dem Kolbenboden noch nicht in Kontakt steht, ist die Klemmkraft F zunächst noch gleich null. Der Druck p einer Hydraulikpumpe der hydraulischen Bremsvorrichtung ist in dieser Phase ebenfalls Null.

Phase II zwischen den Zeitpunkten t2 und t3 markiert die Leerlaufphase, in der sich ein Leerlaufstrom, eine Leerlaufspannung und eine Leerlaufdrehzahl einstellen. Die Klemmkraft der Radbremse beträgt in dieser Phase weiterhin null, da die Mutter mit dem Kolbenboden noch nicht in Kontakt steht. Der Druck p in der hydraulischen Bremsvorrichtung ist weiterhin gleich Null.

In Phase III zwischen den Zeitpunkten t3 und t4 erfolgt der Kraftaufbau. Die Mutter steht mit dem Kolbenboden in Kontakt, und der Kolben wird durch die Drehung der Spindel gegen die Bremsscheibe gedrückt. Dabei steigt der Strom I des Bremsmotors an. Die Spannung U des Bremsmotors fällt in dieser Phase aufgrund der Belastung des Bremsmotors vom Niveau der Leerlaufspannung leicht ab. Die Drehzahl n des Bremsmotors fällt mit zunehmendem Klemmkraftaufbau ebenfalls ab. Kurz bevor eine vorgegebene Zielklemmkraft erreicht ist, wird die Hydraulikpumpe der hydraulischen Bremsvorrichtung zugeschaltet und ein hydraulischer Druck p aufgebaut. Die Zielklemmkraft kann z. B. einen Wert haben, der nahe der maximalen Klemmkraft des Bremsmotors liegt.

Phase IV zwischen den Zeitpunkten t4 und t5 beginnt mit Erreichen der Zielklemmkraft. In dieser Phase sind beide Bremssysteme aktiv und die elektrische Bremsvorrichtung wird von der hydraulischen Bremsvorrichtung unterstützt. Die Gesamt-Klemmkraft F setzt sich dabei aus einem Anteil des elektrischen Bremsmotors und einem Anteil der hydraulischen Bremsvorrichtung zusammen. Der Strom I des Bremsmotors wird in Phase IV auf einen Maximalstrom begrenzt. Der hydraulische Druck p steigt solange an, bis eine vorgegebene Gesamt-Klemmkraft erreicht ist. Danach werden der Bremsmotor und der Pumpenmotor der hydraulischen Bremsvorrichtung abgeschaltet. Demzufolge fallen der hydraulische Druck p, der Strom I, die Spannung U und die Drehzahl n des Bremsmotors auf null. Die Gesamt-Klemmkraft F wird dabei gehalten.

Die hydraulische Bremsvorrichtung wird erst in Phase IV aktiviert, so dass mit dem Zeitpunkt t4 mit dem Aufbau des hydraulischen Drucks p begonnen wird, der am Ende der Phase IV, also zum Zeitpunkt t5, sein Maximum erreicht hat.

Der Zeitpunkt der Druckunterstützung durch die hydraulische Bremsvorrichtung ist jedoch nicht zwingend an den Zeitpunkt t4 gekoppelt, zu dem die Phase IV beginnt. Zweckmäßigerweise wird der Zeitpunkt der hydraulischen Unterstützung als Funktion einer Kenngröße des elektrischen Bremsmotors, insbesondere des Stroms des Bremsmotors festgelegt. Zu diesem Zweck wird überprüft, ob der Strom I des Bremsmotors einen zugeordneten Schwellenwert Iₗᵢₘ überschreitet. Ist dies der Fall, so wird mit der hydraulischen Druckunterstützung begonnen.

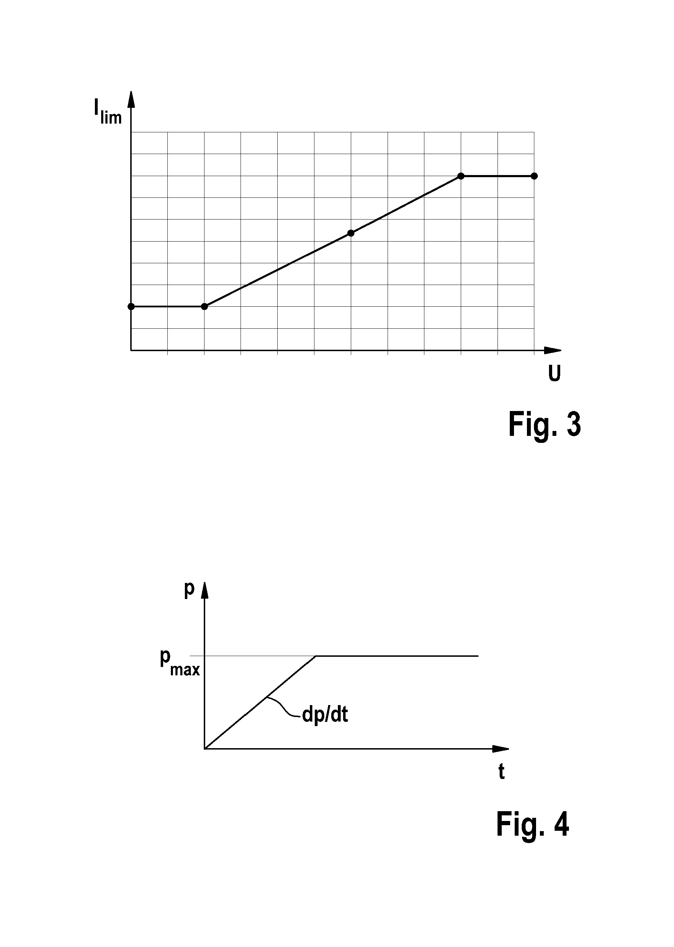

Wie Fig. 3 zu entnehmen, kann der Strom-Schwellenwert Iₗᵢₘ als Funktion der Spannung U festgelegt werden. Der Schwellenwert Iₗᵢₘ stellt somit keine konstante Größe dar, sondern wird adaptiv in Abhängigkeit der Motorspannung U angepasst. Der Funktionsverlauf gemäß Fig. 3 ist als Rampe ausgebildet, die zu einem bestimmten Spannungswert ein Maximum erreicht. Durch die adaptive Anpassung des Strom-Schwellenwerts Iₗᵢₘ kann das Auslösen der Phase IV an die Betriebsbedingungen des Bremsmotors angepasst werden. Die adaptive Anpassung des Schwellenwerts ist erforderlich, da der maximal mögliche Motorstrom proportional zur Motorspannung sinkt und damit auch das maximal mögliche Motormoment in der Feststellbremse nur in reduziertem Maße zur Verfügung steht.

Grundsätzlich möglich ist es aber auch, den Strom-Schwellenwert Iₗᵢₘ als feste, konstante Größe vorzugeben.

In Fig. 4 ist der Druckverlauf des hydraulischen Drucks p als Funktion der Zeit dargestellt. Der Druckverlauf wird als Sollkurve zur Einstellung der hydraulischen Bremsvorrichtung vorgegeben. Die Einstellung erfolgt in einer lediglich gesteuerten Weise ohne Rückführungsschleife; nur eine Kenngröße des elektrischen Bremsmotors wird auf einen Sollwert eingeregelt. Die Regelung des Bremsmotors erfolgt in Phase III über den Strom. In Phase IV wird dagegen die vom Bremsmotor erzeugte Kraft über den zurückgelegten Weg und die Steifigkeit des Bremssattels eingeregelt.

Wie Fig. 4 zu entnehmen, ist die Sollkurve des Drucks p als Rampe mit einer Steigung dp/dt ausgeführt, die bei pₘₐₓ ihren Maximalwert erreicht. Die Steigung dp/dt sowie der Maximalwert pₘₐₓ stellen Parameter dar, welche entweder fest vorgegeben werden oder als Funktion von Zustands- oder Kenngrößen der elektromechanischen Bremsvorrichtung und/oder der hydraulischen Bremsvorrichtung bestimmt werden. Beispielsweise kann ein höherer Gradient und ein höherer Maximalwert im Verlauf der Sollkurve p gewählt werden, wenn in der elektromechanischen Bremsvorrichtung ein Leistungsverlust auftritt.

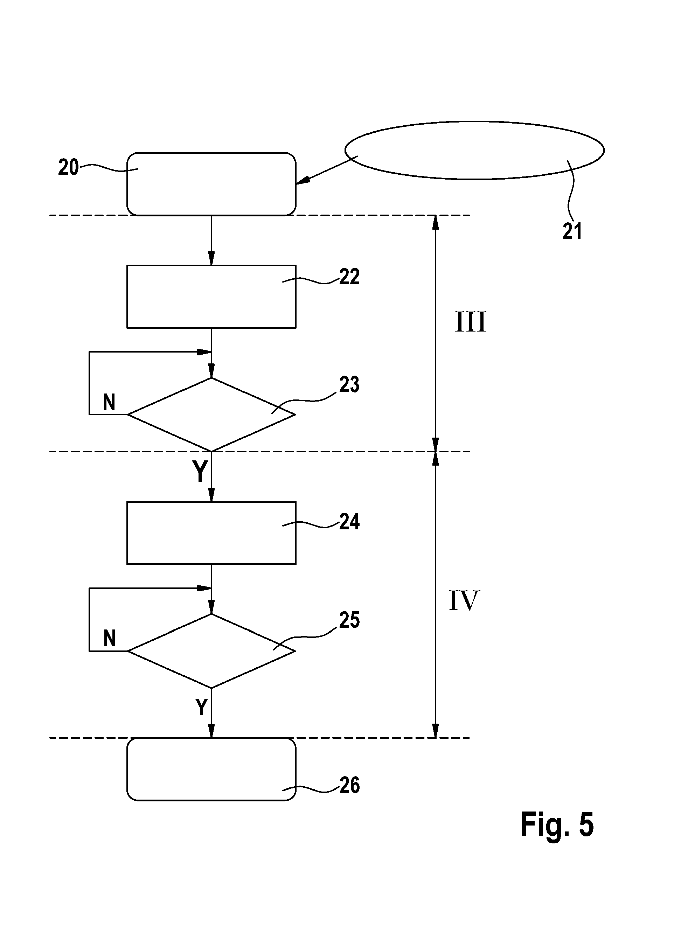

In Fig. 5 ist ein Ablaufschema mit einzelnen Verfahrensschritten zum Einstellen der Gesamtklemmkraft in der Feststellbremse dargestellt. Das Ablaufschema setzt gemäß dem ersten Verfahrensschritt 20 in der Kraftanstiegsphase 3 zum Zeitpunkt t3 ein. Über den Schritt 21 wird als Zielklemmkraft eine Klemmkraft vorgegeben, mit der das Fahrzeug auf einer geneigten Fläche mit 30 % Neigung festgesetzt werden kann.

Die weiteren Verfahrensschritte 22 und 23 entsprechen der Kraftanstiegsphase III. Gemäß Schritt 22 wird das Auslösekriterium zum Starten der hydraulischen Klemmkraftunterstützung ermittelt. Hierzu wird der Strom-Schwellenwert Iₗᵢₘ gemäß dem in Fig. 3 dargestellten Zusammenhang bestimmt. Im folgenden Verfahrensschritt 23 wird abgefragt, ob der aktuelle Motorstrom I den Strom-Schwellenwert Iₗᵢₘ übersteigt. Ist dies nicht der Fall, wird der Nein-Verzweigung ("N") folgend wieder zurückgekehrt und in regelmäßigen Abständen erneut überprüft, ob der Motorstrom I den zugeordneten Schwellenwert Iₗᵢₘ überschreitet.

Sobald der Motorstrom I größer ist als der Schwellenwert Iₗᵢₘ, wird der Ja-Verzweigung ("Y") folgend zum nächsten Verfahrensschritt 24 fortgefahren, der ebenso wie der darauf folgende Verfahrensschritt 25 der Phase IV (Fig. 2) zugeordnet ist. Im Verfahrensschritt 24 wird eine gesteuerte Druckrampe gemäß dem Schaubild nach Fig. 4 gestartet, hierbei wird der hydraulische Druck in der hydraulischen Bremsvorrichtung gemäß der vorgegebenen Rampenfunktion nach Fig. 4 hochgefahren. Im nächsten Schritt 25 wird abgefragt, ob die Gesamtklemmkraft, die sich aus dem elektromotorischen und dem hydraulischen Anteil zusammensetzt, erreicht worden ist. Ist dies nicht der Fall, wird der Nein-Verzweigung folgend wieder zur Abfrage zurückgekehrt und die Abfrage in regelmäßigen Abständen erneut gestartet. Ist dagegen die Gesamtklemmkraft erreicht, wird der Ja-Verzweigung folgend zum nächsten Verfahrensschritt 26 fortgefahren, der das Ende des Zuspannvorgangs in der Feststellbremse markiert. Im Verfahrensschritt 26 ist der Zeitpunkt t5 (Fig. 2) erreicht.

## Patentansprüche

1. Verfahren zum Einstellen der von einer Feststellbremse (1) ausgeübten Klemmkraft, mit einer elektromechanischen Bremsvorrichtung mit einem elektrischen Aktuator (3) zur Erzeugung einer elektromechanischen Klemmkraft und mit einer ergänzend zuschaltbaren Zusatzbremsvorrichtung zur Erzeugung einer Zusatzklemmkraft, **dadurch gekennzeichnet, dass** eine Kenngröße des elektrischen Aktuators auf einen definierten Wert eingeregelt wird und dass zugleich eine die Zusatzklemmkraft bestimmende Zustandsgröße der Zusatzbremsvorrichtung ohne rückführende Regelung auf einen Sollwert eingestellt wird.

2. Verfahren nach Anspruch 1, **dadurch gekennzeichnet, dass** als Kenngröße der den Aktuator (3) beaufschlagende Strom eingeregelt wird.

3. Verfahren nach Anspruch 1 oder 2, **dadurch gekennzeichnet, dass** als Kenngröße die vom Aktuator (3) erzeugte Klemmkraft eingeregelt wird.

4. Verfahren nach einem der Ansprüche 1 bis 3, **dadurch gekennzeichnet, dass** die Zusatzklemmkraft der Zusatzbremsvorrichtung zugeschaltet wird, wenn eine Zustandsgröße des Aktuators (3) außerhalb eines definierten Wertebereichs liegt.

5. Verfahren nach Anspruch 4, **dadurch gekennzeichnet, dass** die Zusatzklemmkraft der Zusatzbremsvorrichtung zugeschaltet wird, wenn die zu regelnde Kenngröße des Aktuators (3) oder eine damit korrelierende Größe einen Schwellenwert überschreitet.

6. Verfahren nach einem der Ansprüche 1 bis 5, **dadurch gekennzeichnet, dass** die Zustandsgröße der Zusatzbremsvorrichtung als zeitabhängiger Verlauf vorliegt und ein dem aktuellen Zeitpunkt entsprechender Wert der Zustandsgröße eingestellt wird.

7. Verfahren nach Anspruch 6, **dadurch gekennzeichnet, dass** die den Verlauf bestimmenden Parameter fest vorgegeben werden.

8. Verfahren nach Anspruch 6, **dadurch gekennzeichnet, dass** die den Verlauf bestimmenden Parameter als Funktion von Parametern bzw. Zustandsgrößen des elektrischen Aktuators (3) bestimmt werden.

9. Verfahren nach Anspruch 8, **dadurch gekennzeichnet, dass** im Falle eines Funktionsabfalls bzw. Defekts des elektrischen Aktuators (3) und/oder der Zusatzbremsvorrichtung die den Verlauf bestimmenden Parameter angepasst werden.

10. Verfahren nach einem der Ansprüche 1 bis 9, **dadurch gekennzeichnet, dass** die Zustandsgröße der Zusatzbremsvorrichtung einen rampenförmigen Anstieg bis zum Erreichen eines Maximalwerts aufweist.

11. Verfahren nach einem der Ansprüche 1 bis 10, **dadurch gekennzeichnet, dass** die Zusatzbremsvorrichtung eine hydraulische Fahrzeugbremse und die Zustandsgröße der Hydraulikdruck ist.

12. Verfahren nach einem der Ansprüche 1 bis 11, **dadurch gekennzeichnet, dass** der elektrische Aktuator (3) der elektromechanischen Bremsvorrichtung als ein elektrischer Bremsmotor (3) ausgeführt ist, dessen Drehzahl (n) über den Strom (I) geregelt wird.

13. Regel- bzw. Steuergerät zur Durchführung des Verfahrens nach einem der Ansprüche 1 bis 12, **dadurch gekennzeichnet, dass** Mittel zur Einregelung einer Kenngröße des elektrischen Aktuators auf einen definierten Wert sowie Mittel zur Einstellung einer die Zusatzklemmkraft bestimmenden Zustandsgröße der Zusatzbremsvorrichtung ohne rückführende Regelung auf einen Sollwert vorgesehen sind, wobei die Einregelung. der Kennngröße und Einstellung der Zustandsgröße zugleich erfolgen.

14. Feststellbremse in einem Fahrzeug mit einem Regel- bzw. Steuergerät nach Anspruch 13.

## Claims

1. Method for adjusting the clamping force exerted by a parking brake (1) having an electromechanical brake device with an electric actuator (3) for generating an electromechanical clamping force and having an additional brake device which can be activated additionally in order to generate an additional clamping force, **characterized in that** a characteristic variable for the electric actuator is set to a defined value, and **in that** at the same time a state variable, which determines the additional clamping force, of the additional brake device is adjusted to a setpoint value without feedback control.

2. Method according to Claim 1, **characterized in that** the current which is applied to the actuator (3) is set as a characteristic variable.

3. Method according to Claim 1 or 2, **characterized in that** the clamping force which is generated by the actuator (3) is set as a characteristic variable.

4. Method according to one of Claims 1 to 3, **characterized in that** the additional clamping force of the additional brake device is activated if a state variable of the actuator (3) is outside a defined value range.

5. Method according to Claim 4, **characterized in that** the additional clamping force of the additional brake device is activated if the characteristic variable, to be controlled, of the actuator (3) or a variable which correlates therewith exceeds a threshold value.

6. Method according to one of Claims 1 to 5, **characterized in that** the state variable of the additional brake device is present as a time-dependent profile, and a value of the state variable which corresponds to the current time is set.

7. Method according to Claim 6, **characterized in that** the parameters which determine the profile are permanently predefined.

8. Method according to Claim 6, **characterized in that** the parameters which determine the profile are determined as a function of parameters or state variables of the electric actuator (3).

9. Method according to Claim 8, **characterized in that** in the case of a functional failure or defect of the electric actuator (3) and/or of the additional brake device the parameters which determine the profile are adapted.

10. Method according to one of Claims 1 to 9, **characterized in that** the state variable of the additional brake device has a ramp-shaped increase up to the point when a maximum value is reached.

11. Method according to one of Claims 1 to 10, **characterized in that** the additional brake device is a hydraulic vehicle brake and the state variable is the hydraulic pressure.

12. Method according to one of Claims 1 to 11, **characterized in that** the electric actuator (3) of the electromechanical brake device is embodied as an electric brake motor (3), the rotational speed (n) of which is controlled by means of the current (I).

13. Closed-loop or open-loop control device for carrying out the method according to one of Claims 1 to 12, **characterized in that** means for setting a characteristic variable of the electric actuator to a defined value and means for adjusting a state variable, which determines the additional clamping force, of the additional brake device without feedback control to a setpoint value are provided, wherein the setting of the characteristic variable and the adjustment of the state variable take place at the same time.

14. Parking brake in a vehicle having a closed-loop or open-loop control device according to Claim 13.

## Revendications

1. Procédé permettant d'ajuster la force de serrage exercée par un frein de stationnement (1), avec un dispositif de freinage électromécanique comprenant un actionneur électrique (3) pour générer une force de serrage électromécanique et avec un dispositif de freinage supplémentaire pouvant être activé en complément pour générer une force de serrage supplémentaire, **caractérisé en ce qu'**une grandeur caractéristique de l'actionneur électrique est réglée à une valeur définie et **en ce qu'**en même temps une grandeur d'état du dispositif de freinage supplémentaire déterminant la force de serrage supplémentaire est ajustée à une valeur de consigne sans régulation à rétroaction.

2. Procédé selon la revendication 1, **caractérisé en ce que** le courant alimentant l'actionneur (3) est réglé en tant que grandeur caractéristique.

3. Procédé selon la revendication 1 ou 2, **caractérisé en ce que** la force de serrage générée par l'actionneur (3) est réglée en tant que grandeur caractéristique.

4. Procédé selon l'une quelconque des revendications 1 à 3, **caractérisé en ce que** la force de serrage supplémentaire du dispositif de freinage supplémentaire est activée lorsqu'une grandeur d'état de l'actionneur (3) se situe en dehors d'une plage de valeurs définie.

5. Procédé selon la revendication 4, **caractérisé en ce que** la force de serrage supplémentaire du dispositif de freinage supplémentaire est activée lorsque la grandeur caractéristique à réguler de l'actionneur (3) ou une grandeur corrélée à celle-ci dépasse une valeur seuil.

6. Procédé selon l'une quelconque des revendications 1 à 5, **caractérisé en ce que** la grandeur d'état du dispositif de freinage supplémentaire existe en tant que courbe dépendante du temps et une valeur de la grandeur d'état correspondant à l'instant actuel est ajustée.

7. Procédé selon la revendication 6, **caractérisé en ce que** les paramètres déterminant la courbe sont prédéfinis de manière fixée.

8. Procédé selon la revendication 6, **caractérisé en ce que** les paramètres déterminant la courbe sont déterminés en tant que fonction de paramètres ou de grandeurs d'état de l'actionneur électrique (3).

9. Procédé selon la revendication 8, **caractérisé en ce qu'**en cas de dégradation de fonction ou d'un défaut de l'actionneur électrique (3) et/ou du dispositif de freinage supplémentaire, les paramètres déterminant la courbe sont adaptés.

10. Procédé selon l'une quelconque des revendications 1 à 9, **caractérisé en ce que** la grandeur d'état du dispositif de freinage supplémentaire présente une augmentation en forme de rampe jusqu'à l'atteinte d'une valeur maximale.

11. Procédé selon l'une quelconque des revendications 1 à 10, **caractérisé en ce que** le dispositif de freinage supplémentaire est un frein hydraulique de véhicule et la grandeur d'état est la pression hydraulique.

12. Procédé selon l'une quelconque des revendications 1 à 11, **caractérisé en ce que** l'actionneur électrique (3) du dispositif de freinage électromécanique est réalisé sous forme de moteur de frein électrique (3) dont le régime (n) est régulé par le biais du courant (I).

13. Appareil de régulation ou de commande pour mettre en oeuvre le procédé selon l'une quelconque des revendications 1 à 12, **caractérisé en ce que** des moyens de réglage d'une grandeur caractéristique de l'actionneur électrique à une valeur définie ainsi que des moyens d'ajustement d'une grandeur d'état déterminant la force de serrage supplémentaire du dispositif de freinage supplémentaire à une valeur de consigne sans régulation à rétroaction sont prévus, le réglage de la grandeur caractéristique et l'ajustement de la grandeur d'état s'effectuant en même temps.

14. Frein de stationnement dans un véhicule comprenant un appareil de régulation ou de commande selon la revendication 13.
